# EUROPEAN PATENT APPLICATION

(11) **EP 4 246 686 A1**
(43) Date of publication of application: **20.09.2023**
(21) Application number: 22890189.8
(22) Date of filing: 29.09.2022
(51) Int. Cl.: H01M 50/24, H01M 50/211, A62C 3/16

(54) **BATTERY MODULE AND BATTERY PACK COMPRISING SAME**

(30) Priority: 03.11.2021 KR 20210149626
(71) Applicant: LG Energy Solution, Ltd., Seoul 07335 (KR)
(72) Inventor: CHO, Hyunyoung, Daejeon 34122 (KR); KIM, Yongil, Daejeon 34122 (KR)
(74) Representative: Goddar, Heinz J.
(86) International application number: PCT/KR2022/014711
(87) International publication number: WO 2023/080454

(57) **Abstract**

A battery module according to one embodiment of the present disclosure includes a battery cell stack in which a plurality of battery cells are stacked; a module frame that surrounds the battery cell stack; and a fire extinguishing member interposed between the battery cells, wherein the battery cell includes a first battery cell and a second battery cell that are adjacent to each other, and wherein the fire extinguishing member surrounds an upper surface of the first battery cell, a space between the first battery cell and the second battery cell, and a lower surface of the second battery cell in a zigzag shape.

## Description

### [TECHNICAL FIELD]

### Cross Citation with Related Application(s)

This application claims the benefit of Korean Patent Application No. 10-2021-0149626 filed on November 3, 2021 with Korean Intellectual Property Office, the entire contents of which are incorporated herein by reference.

The present disclosure relates to a battery module and a battery pack including the same, and more particularly, to a battery module having improved safety and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are arranged, but in the case of a secondary battery used for a middle or large-sized device such as an automobile, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a BMS (battery management system) and a cooling system to form a battery pack.

When the temperature of the secondary battery rises higher than an appropriate temperature, the performance of the secondary battery may be deteriorated, and in the worst case, there is also a risk of an explosion or ignition. In particular, when a thermal runaway phenomenon occurs in a specific battery cell of a secondary battery, propagation to adjacent battery cells becomes very fast. In addition, since there is a high possibility of large-scale fire and explosion due to thermal runaway propagation between battery cells, it is very important to prevent thermal runaway and to suppress and delay the propagation of the thermal runaway phenomenon.

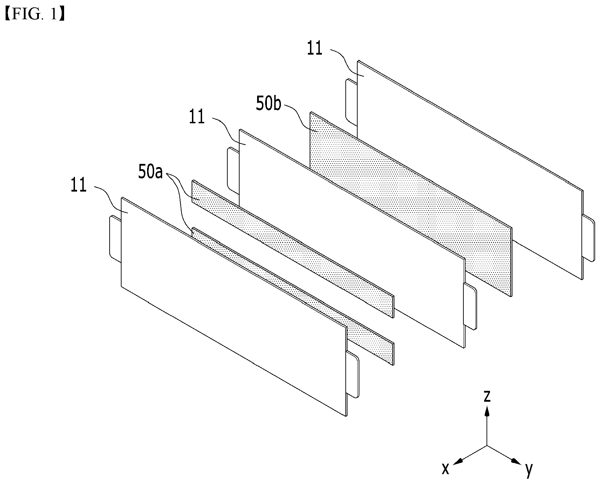

Fig. 1 is a diagram showing a battery cell and an adhesive member included in a conventional battery module.

Referring to Fig. 1, the battery cell stack includes battery cells 11 and adhesive members 50a and 50b interposed between the battery cells 11 adjacent to each other. At this time, the adhesive members 50a and 50b include a separate type adhesive member 50a or a whole type adhesive member 50b depending on the shape thereof.

That is, a conventional battery module is configured such that the battery cells 11 are attached to each other through adhesive members 50a and 50b such as double-sided tape between the battery cells 11 to form a battery cell stack. However, in this case, there is a problem that when a fire occurs in the battery module, it is difficult to delay the transfer of the ignition phenomenon occurring in some battery cells 11 to other battery cells 11.

In addition, since the adhesive members 50a and 50b do not cover an upper part and a lower part of the battery cell 11, heat and flame are easily transferred to the adjacent battery cells 11, especially when a thermal runaway phenomenon occurs.

Therefore, there is a need to develop a battery module that not only covers the upper part and the lower part of the battery cells 11, but also suppresses thermal runaway and prevents and delays the propagation of thermal runaway between the battery cells 11, thereby improving safety.

### [DETAILED DESCRIPTION OF THE INVENTION]

### [Technical Problem]

It is an object of the present disclosure to provide a battery module that prevents the propagation of thermal runaway between battery cells or effectively delays the propagation of thermal runaway when thermal runaway occurs, and a battery pack including the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack in which a plurality of battery cells are stacked; a module frame that surrounds the battery cell stack; and a fire extinguishing member interposed between the battery cells, wherein the battery cell includes a first battery cell and a second battery cell that are adjacent to each other, and wherein the fire extinguishing member surrounds an upper surface of the first battery cell, a space between the first battery cell and the second battery cell, and a lower surface of the second battery cell in a zigzag shape.

The fire extinguishing member may include a fire extinguishing agent; and a case that stores a fire extinguishing agent.

The case is melted when a high temperature occurs inside the battery module, and the fire extinguishing agent stored in the case may be discharged to the outside of the case.

The fire extinguishing member may have double-sided adhesive property.

The case may have double-sided adhesive property.

The fire extinguishing member may come into contact with an upper part of the module frame and a lower part of the module frame.

The fire extinguishing member of the battery module according to another embodiment of the present disclosure may come into contact with the upper surface of the first battery cell and the lower surface of the second battery cell.

The fire extinguishing member may adhere the upper part of the module frame to the upper surface of the first battery cell, and may adhere the lower part of the module frame and the lower surface of the second battery cell.

The fire extinguishing member may adhere the first battery cell and the second battery cell to each other.

The fire extinguishing member may be interposed between a side surface part of the module frame and an outermost battery cell.

The fire extinguishing member may adhere the side surface part of the module frame and the outermost battery cell.

According to yet another embodiment of the present disclosure, there is provided a battery pack comprising the above-mentioned battery module.

### [Advantageous Effects]

The battery module according to one embodiment of the present disclosure is configured such that a fire extinguishing member is interposed between a pair of battery cells adjacent to each other in the battery cell stack, and the fire extinguishing member is formed so as to surround the battery cell in a zigzag shape, thereby capable of preventing the propagation of thermal runaway between battery cells when thermal runaway occurs, or effectively delaying the propagation of thermal runaway.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a battery cell and an adhesive member included in a conventional battery module;
Fig. 2 is a perspective view showing a battery module according to one embodiment of the present disclosure;
Fig. 3 is a perspective view showing a battery cell included in the battery module of Fig. 2;
Fig. 4 is a diagram showing a cross section cut along the cutting line a-a' of Fig. 2;
Fig. 5 is a diagram showing a battery module according to another embodiment of the present disclosure; and
Fig. 6 is a perspective view showing a part of a battery cell stack included in the battery module of Fig. 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used herein to explain various components, but the components should not be limited by the terms. These terms are only used to distinguish one component from the other component.

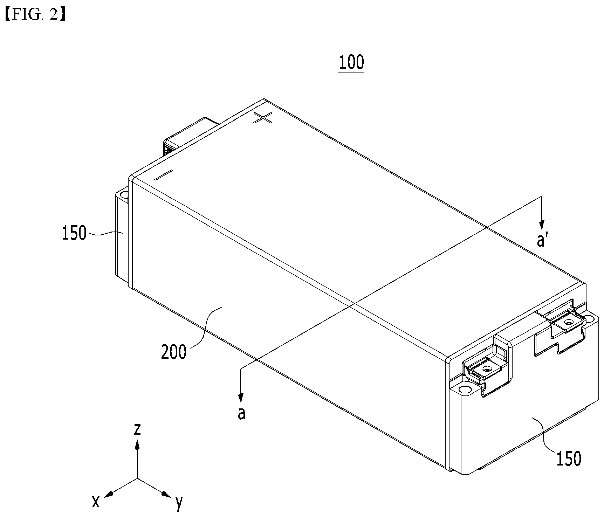

Now, the battery module of the present disclosure will be described with reference to Figs. 2 to 6.

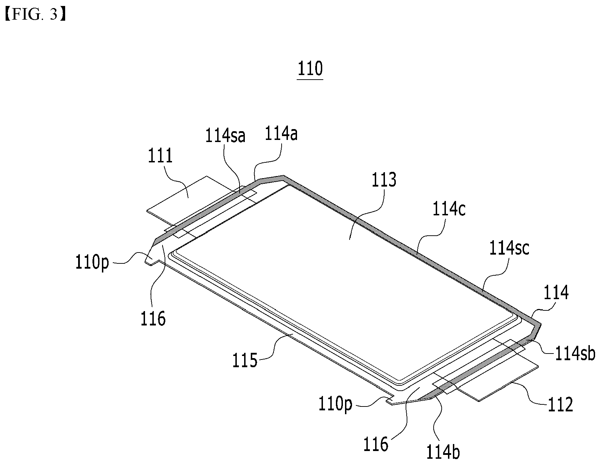

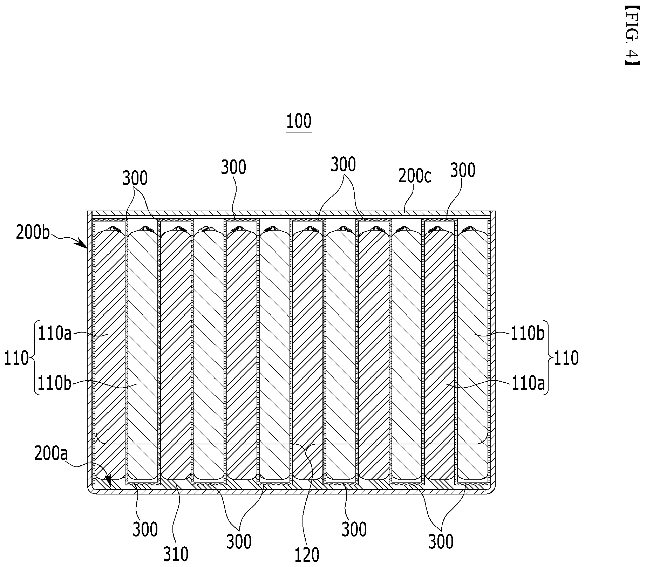

Fig. 2 is a perspective view showing a battery module according to one embodiment of the present disclosure. Fig. 3 is a perspective view showing a battery cell included in the battery module of Fig. 2. Fig. 4 is a diagram showing a cross section cut along the cutting line a-a' of Fig. 2.

Referring to Figs. 2 to 4, the battery module 100 according to the present embodiment includes a battery cell stack 120 in which a plurality of battery cells 110 are stacked and a module frame 200 that surrounds the battery cell stack 120.

First, the battery cell 110 is preferably a pouch-type battery cell, and can be formed in a rectangular sheet-like structure. For example, referring to Fig. 3, the battery cell 110 according to the present embodiment has a structure in which two electrode leads 111 and 112 face each other and protrude from one end 114a and the other end 114b of the cell main body 113, respectively. That is, the battery cell 110 includes electrode leads 111 and 112 that are protruded in mutually opposite directions. More specifically, the electrode leads 111 and 112 are connected to an electrode assembly (not shown), and are protruded from the electrode assembly (not shown) to the outside of the battery cell 110.

Meanwhile, the battery cell 110 can be produced by joining both ends 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, wherein the sealing parts 114sa, 114sb and 114sc have a structure that is sealed by a method such as heat-sealing, and the remaining other side part may be composed of a connection part 115. The cell case 114 may be composed of a laminated sheet including a resin layer and a metal layer.

Additionally, the connection part 115 may extend long along one edge of the battery cell 110, and a bat-ear 110p may be formed at the end of the connection part 115. Further, while the cell case 114 is sealed with the protruding electrode leads 111 and 112 being interposed therebetween, a terrace part 116 may be formed between the electrode leads 111 and 112 and the cell main body 113. That is, the battery cell 110 may include a terrace part 116 formed to extend from the cell case 114 in the direction in which the electrode leads 111 and 112 protrude.

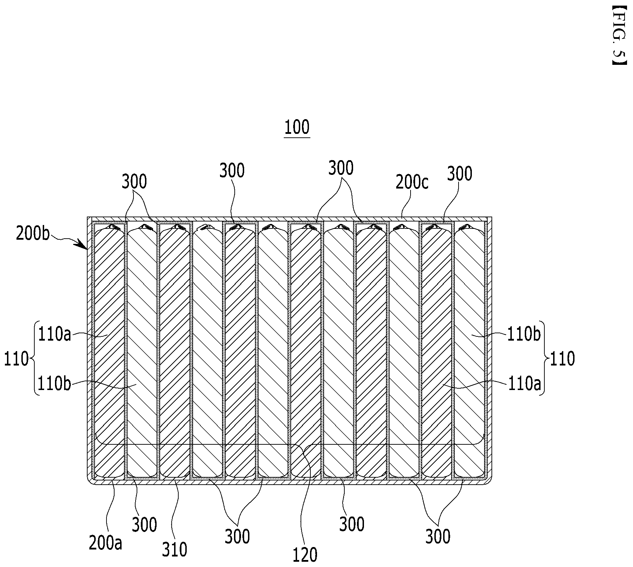

Such a battery cell 110 may be composed by a plurality of numbers, and the plurality of battery cells 110 may be stacked so as to be electrically connected to each other, thereby forming a battery cell stack 120. Particularly, as shown in Fig. 5, a plurality of battery cells 110 may be stacked along the direction parallel to the y-axis. Thereby, the electrode leads 111 and 112 may protrude in the x-axis direction and the -x-axis direction, respectively.

Meanwhile, the module frame 200 may be a mono-frame that surrounds the cell stack 120 except the front and rear surfaces. However, the module frame 200 is not limited thereto and may include a frame shape which includes an L-shaped frame or a U-shaped frame which is opened in its upper, front and rear surfaces and covers the lower part and both side parts of the battery cell stack 120, and an upper plate that covers the upper part of the battery cell stack 120. The battery cell stack 120 housed inside the module frame 200 can be physically protected through the module frame 200. At this time, the module frame 200 may include a lower part 200a of the module frame 200, a side surface part 200b of the module frame 200, and an upper part 200c of the module frame 200.

The end plate 150 may cover the front and rear surfaces of the battery cell stack 120 that is open in the module frame 200. The end plate 150 can be weld-coupled to front and rear end edges of the module frame 200.

A bus bar frame (not shown) may be formed between the end plate 150 and the front and rear surfaces of the battery cell stack 120. A plurality of bus bars mounted to the bus bar frame are formed so as to be protruded from the battery cells 110 and can come into contact with electrode leads 111 and 112 mounted to the bus bar frame.

Moreover, the battery module 100 according to the present embodiment may further comprise a thermal conductive resin layer 310 located between the lower surface of the battery cell stack 120 and the lower part 200c of the module frame 200, and the thermal conductive resin layer 310 can perform a function of transferring heat generated from the battery cell 110 to the bottom of the battery module 100.

Meanwhile, referring to Fig. 4, the battery module 100 according to the present embodiment includes a fire extinguishing member 300 interposed between the battery cells 110.

At this time, the battery cell 110 includes a first battery cell 110a and a second battery cell 110b that are adjacent to each other. Further, the second battery cell 110b may be formed so as to adjoin after the first battery cell 110a. Therefore, the first battery cell 110a and the second battery cell 110b may be alternately formed.

Further, referring to Fig. 4, the fire extinguishing member 300 surrounds an upper surface of the first battery cell 110a, a space between the first battery cell 110a and the second battery cell 110b, and a lower surface of the second battery cell 110b in a zigzag shape. That is, the fire extinguishing member 300 may cover an upper surface of the first battery cell 110a and a lower surface of the second battery cell 110b, and may be formed so as to surround a space between the first battery cell 110a and the second battery cell 110b. In particular, since the first battery cell 110a and the second battery cell 110b may be alternately formed, the fire extinguishing member 300 may respectively surround a space between the first battery cells 110a and the second battery cells 110b which are alternately formed.

At this time, the fire extinguishing member 300 may include a fire extinguishing agent and a case that stores the fire extinguishing agent. The fire extinguishing member 300 shown in Fig. 4 may be the case illustrated above. Therefore, the fire extinguishing agent may be formed inside the case of the fire extinguishing member 300.

The case is melted when a high temperature occurs inside the battery module 100 and the battery cell 110, and the fire extinguishing agent stored in the case may be discharged to the outside of the case. In particular, the case may be melted when thermal runaway occurs inside the battery module 100. At this time, the fire extinguishing agent discharged from the case can achieve the effect of preventing the thermal runaway phenomenon occurring in the battery cell 110 and delaying the propagation of thermal runaway. Further, through suppression of fire and flame, the effect of preventing and delaying the propagation of fire and flame to adjacent battery cells 110 can be achieved.

Therefore, the case may be made of a material that can melt when a thermal runaway phenomenon occurs. Also, the fire extinguishing agent may be a liquid fire extinguishing agent and/or a commonly used powder type fire extinguishing agent. As an example, the fire extinguishing agent material may be a liquid fire extinguishing agent including a foam fire extinguishing agent, and may be any one of sodium hydrogen carbonate (NaHCO₃), potassium hydrogen carbonate (KHCO₃), ammonium phosphate (NH₄H₂PO₃), and a mixture of "potassium hydrogen carbonate (KHCO₃) and urea ((NH₂)₂CO)". However, the fire extinguishing agent is not limited thereto, and any material that performs a fire extinguishing function can be used without limitation.

Further, the fire extinguishing member 300 may have double-sided adhesive property. In particular, the case of the fire extinguishing member 300 may have double-sided adhesive property. Therefore, as will be described later, it can perform a function of fixing the first battery cell 110a and the second battery cell 110b formed on both surfaces of the fire extinguishing member 300 centering on the fire extinguishing member 300.

Further, referring to Fig. 4, the fire extinguishing member 300 may come into contact with the upper part 200c of the module frame 200 and the lower part 200a of the module frame 200. Moreover, since the thermal conductive resin layer 310 may be formed on the lower part 200a of the module frame 200, the fire extinguishing member 300 may come into contact with the thermal conductive resin layer 310.

Further, the fire extinguishing member 300 can be formed so as to surround a space between the first battery cell 110a and the second battery cell 1 10b, and can be formed so as to be interposed between the first battery cell 110a and the second battery cell 110b, thereby adhering the first battery cell 110a and the second battery cell 110b to each other.

In addition, the fire extinguishing member 300 may be interposed between the side surface part 200b of the module frame 200 and the outermost battery cell 110. That is, the fire extinguishing member 300 may be formed so as to contact the side surface part 200b of the module frame 200, and may also be formed so as to contact the side surface of the outermost battery cell 110. Therefore, the fire extinguishing member 300 may adhere the outermost battery cell 110 included in the side surface part 200b of the module frame 200 and the battery cell stack 120, and the battery cell stack 120 can be fixed inside the module frame 200.

Therefore, the fire extinguishing member 130 is located at an upper part or a lower part of the battery cell 110, and interposed between adjacent battery cells 110, thereby effectively suppressing a flame generated in the battery cell 110 when an ignition phenomenon or a thermal runaway phenomenon occurs in the battery module 100 according to the present embodiment. In addition, in the process of extinguishing the flame generated in the battery cell 110 by the fire extinguishing member 130, carbon dioxide and water vapor may be generated. This reaction is an endothermic reaction and can absorb the heat of the thermal runaway phenomenon generated in the battery cell 110, and oxygen supply can also be cut off, thereby effectively delaying the propagation of flame and heat between the battery cells 110. Further, the safety of the battery module 100 can be improved.

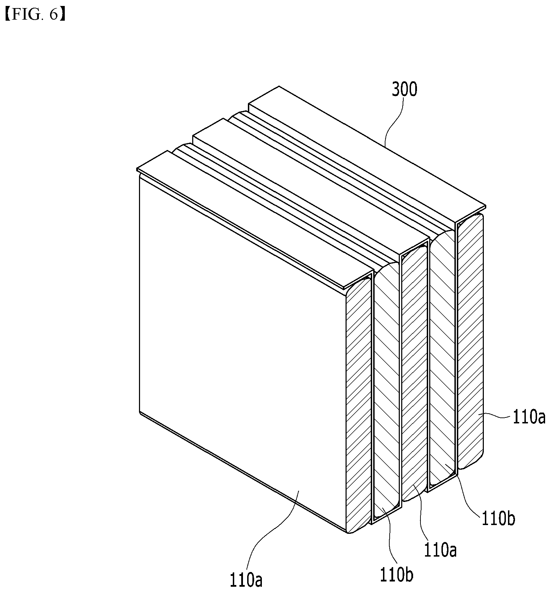

Next, the battery modules according to other embodiments of the present disclosure will be described with reference to Figs. 5 and 6. Since there are contents overlapping with those described above, only the portions that differ from the contents described above will be mainly described.

Fig. 5 is a diagram showing a battery module according to another embodiment of the present disclosure. Fig. 6 is a perspective view showing a part of a battery cell stack included in the battery module of Fig. 5.

Referring to Fig. 5, the fire extinguishing member 300 may come into contact with an upper part 200c of the module frame 200 and a lower part 200a of the module frame 200. Also, since the thermal conductive resin layer 310 may be formed on the lower part 200a of the module frame 200, the fire extinguishing member 300 can come into contact with the thermal conductive resin layer 310.

Further, referring to Figs. 5 and 6, the fire extinguishing member 300 of the present embodiment may come into contact with the upper surface of the first battery cell 110a and the lower surface of the second battery cell 110b.

Therefore, since the fire extinguishing member 300 has double-sided adhesive property as described above, it can adhere the upper part 200c of the module frame 200 and the upper surface of the first battery cell 110a, and can adhere the lower part 200a of the module frame 200 and the lower surface of the second battery cell 110b.

Further, the fire extinguishing member 300 can be formed so as to surround a space between the first battery cell 110a and the second battery cell 110b, and can be formed so as to be interposed between the first battery cell 110a and the second battery cell 110b, thereby adhering the first battery cell 110a and the second battery cell 110b to each other.

At this time, through the adhesion, it is possible to fix between the battery cells 110, and the battery cell stack 120 formed by stacking a plurality of battery cells 110 can be fixed on the module frame 200.

Thereby, each of the battery cells 110 can be isolated through the fire extinguishing member 300 that surrounds the battery cells 110 in a zigzag shape. Therefore, even if a thermal runaway phenomenon occurs in one battery cell 110, the thermal runaway phenomenon can be suppressed through the fire extinguishing member 300, and can delay propagation of the thermal runaway phenomenon. In addition, by adhering and fixing the battery cell stack 120 and the battery cell 110 formed in the module frame 200, the movement of the battery cell stack 120 and the battery cell 110 and damage caused thereby can be minimized, thereby improving the stability of the battery module,

Next, a battery pack according to yet another embodiment of the present disclosure will be described.

The battery pack according to the present embodiment comprises the above-mentioned battery module. In addition, the battery pack of the present disclosure may have a structure in which one or more of the battery modules according to the present embodiment are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

Although preferred embodiments of the present disclosure have been illustrated and described above, the scope of the present disclosure is not limited to specific embodiments described above, and numerous other modifications can be carried out by those skilled in the art, without departing from the spirit and scope of the principles of the invention described in the appended claims. Further, these modifications should not be understood individually from the technical spirit or perspective of the present disclosure.

### [Description of Reference Numerals]

100: battery module
110: battery cell
120: battery cell stack
150: end plate
200: module frame
300: fire extinguishing member

## Claims

1. A battery module comprising:
a battery cell stack in which a plurality of battery cells are stacked;
a module frame that surrounds the battery cell stack; and
a fire extinguishing member interposed between the battery cells,
wherein the battery cell includes a first battery cell and a second battery cell that are adjacent to each other, and
wherein the fire extinguishing member surrounds an upper surface of the first battery cell, a space between the first battery cell and the second battery cell, and a lower surface of the second battery cell in a zigzag shape.

2. The battery module according to claim 1, wherein:
the fire extinguishing member includes,
a fire extinguishing agent; and
a case that stores a fire extinguishing agent.

3. The battery module according to claim 2, wherein:
the case is melted when a high temperature occurs inside the battery module, and
the fire extinguishing agent stored in the case is discharged to the outside of the case.

4. The battery module according to claim 2, wherein:
the fire extinguishing member has double-sided adhesive property.

5. The battery module according to claim 4, wherein:
the case has double-sided adhesive property.

6. The battery module according to claim 1, wherein:
the fire extinguishing member comes into contact with an upper part of the module frame and a lower part of the module frame.

7. The battery module according to claim 1, wherein:
the fire extinguishing member comes into contact with the upper surface of the first battery cell and the lower surface of the second battery cell.

8. The battery module according to claim 1, wherein:
the fire extinguishing member adheres the upper part of the module frame and the upper surface of the first battery cell, and adheres the lower part of the module frame and the lower surface of the second battery cell.

9. The battery module according to claim 1, wherein:
the fire extinguishing member adheres the first battery cell and the second battery cell to each other.

10. The battery module according to claim 1, wherein:
the fire extinguishing member is interposed between a side surface part of the module frame and an outermost battery cell.

11. The battery module according to claim 10, wherein:
the fire extinguishing member adheres the side surface part of the module frame and the outermost battery cell.

12. A battery pack comprising the battery module as set forth in claim 1.
